# EUROPÄISCHE PATENTSCHRIFT

(11) **EP 0 835 160 B1**
(45) Veröffentlichungstag und Bekanntmachung des Hinweises auf die Patenterteilung: **24.05.2000**
(21) Anmeldenummer: 96917362.4
(22) Anmeldetag: 21.06.1996
(51) Int. Cl.: B01D 53/86, B01D 53/88

(54) **VERFAHREN UND EINRICHTUNG ZUM KATALYTISCHEN REINIGEN DES ABGASES AUS EINER VERBRENNUNGSANLAGE**
CATALYTIC PURIFICATION PROCESS AND DEVICE FOR EXHAUST GAS FROM A COMBUSTION SYSTEM
PROCEDE ET DISPOSITIF DE PURIFICATION CATALYTIQUE DES EFFLUENTS GAZEUX D'UN SYSTEME DE COMBUSTION

(30) Priorität: 28.06.1995 DE 19523563
(43) Veröffentlichungstag der Anmeldung: 15.04.1998
(73) Patentinhaber: SIEMENS AKTIENGESELLSCHAFT, 80333 München (DE)
(72) Erfinder: MÜLLER, Raimund, D-91054 Erlangen (DE); HOFMANN, Lothar, D-96224 Burgkunstadt (DE); SCHARDT, Kurt, D-96247 Michelau (DE); MATHES, Wieland, D-96247 Michelau (DE)
(86) Internationale Anmeldenummer: DE9601094
(87) Internationale Veröffentlichungsnummer: WO9701387

(56) Entgegenhaltungen:
- EP-A- 0 558 452
- DE-A- 4 203 807
- DE-A- 4 336 632
- US-A- 3 733 181
- US-A- 3 736 105
- US-A- 5 285 640

## Beschreibung

Die Erfindung bezieht sich auf ein Verfahren zum katalytischen Reinigen des Abgases aus einer Verbrennungsanlage, die mit einem festen, flüssigen oder gasförmigen Brennstoff betrieben wird. Dabei wird durch Eindüsung eines flüssigen oder gasförmigen Reduktionsmittels, wie z.B. wäßriger Harnstofflösung oder gasförmigen Ammoniaks, mit Hilfe eines Zerstäubungsmittels, wie z.B. Druckluft, in den heißen Abgasstrom eine Zersetzung des Reduktionsmittels bewirkt, worauf eine katalytische Reduktion (insbesondere nach der SCR-Methode) mit den schädlichen gasförmigen Abgaskomponenten herbeigeführt wird. Die Erfindung bezieht sich weiter auf eine Einrichtung zum katalytischen Reinigen des Abgases aus einer Verbrennungsanlage.

Die Erfindung findet ihre Anwendung bei der katalytischen Abgasreinigung, insbesondere nach dem SCR-Verfahren, von Motoren und Feuerungsanlagen, z.B. Dieselmotoren, Diesel-Gas-Motoren, Gasmotoren im Magerbetrieb, Kesselfeuerungen mit Öl, Gas, Holz und anderen Brennstoffen, sowie Gasturbinen, die z.B. zum Antrieb von Generatoren, Kompressoren, Nutzfahrzeugen, Arbeitsmaschinen, Schiffen und Lokomotiven oder z.B. zur Erzeugung von Wärme, Dampf und Heißwasser vorgesehen sind.

Aus der EP-B1 0 558 452, insbesondere Figur 1, sind ein Verfahren und eine Einrichtung der eingangs genannten Art zum Reinigen von Abgasen aus Verbrennungsanlagen bekannt. Die bekannte Einrichtung umfaßt ein Gehäuse mit drei parallel zueinander angeordneten Kanälen oder Kammern. In das erste Ende des ersten Kanals, der als Pyrolysationskanal bezeichnet wird, mündet seitlich eine Zuleitung für die zu reinigenden heißen Abgase. Etwa zentral befindet sich an diesem ersten Ende eine Zweistoff-Zerstäuberdüse. Ihr werden ein Reaktionsmittel, wie wäßrige Harnstofflösung, und ein Zerstäubungsmittel, wie Druckluft mit einem Überdruck von 1 bar, zugeführt. Die Harnstofflösung und die Druckluft bilden einen aerosolartigen Sprühkegel, der in Längsrichtung des Pyrolysationskanals getragen wird. Dabei erfolgt eine vollständige Umwandlung oder Zersetzung des Harnstoffs in feinteiliges Ammoniak und Kohlendioxid. Der Abgasstrom mit dem Ammoniak und dem Kohlendioxid tritt am zweiten Ende des Pyrolysationskanals in den parallel angeordneten zweiten Kanal über, der als Mischkanal bezeichnet wird. Er läuft dort in Gegenrichtung, und zwar durch einige Kreuzstrom-Mischer üblicher Bauart. Der nun homogen und intensiv mit dem zersetzten Reaktionsmittel durchmischte Abgasstrom wird anschließend in den parallel angeordneten dritten Kanal, der als Reaktionskanal bezeichnet wird, umgeleitet. Hier wird er zunächst durch zwei im Abstand zueinander angeordnete Reduktionskatalysatoren, insbesondere SCR-Katalysatoren (SCR = selective catalytic reduction), und danach optional durch einen ebenfalls im Abstand dazu angeordneten, geometrisch gleich ausgebildeten Oxidationskatalysator geführt. Die Reduktionskatalysatoren und der gegebenenfalls vorhandene Oxidationskatalysator sind von wabenförmiger Struktur, also mit längslaufenden Kanälen ausgestattet. Der nunmehr von allen gasförmigen Schadstoffen befreite Abgasstrom gelangt danach in einen Wärmetauscher oder tritt über einen Auslaß, z. B. einen Kamin oder Auspuff, aus.

Diese bekannte Einrichtung zum Reinigen von Abgasen kann infolge der Parallelanordnung der drei Kanäle recht kompakt aufgebaut werden. Wünschenswert ist für viele Anwendungsfälle jedoch ein noch kompakterer Aufbau bei gleicher Leistungsfähigkeit. Denn insbesondere bei Kraftfahrzeugen ist der zur Verfügung stehende Raum nur begrenzt.

Aus der DE-A1 42 03 807 ist ein Abgas-Reinigungs-System mit zentralsymmetrischem Aufbau bekannt. Eine Umlenkung ist hier jedoch nicht angegeben. Das System ist relativ lang und daher z.B. nicht für alle Fahrzeugtypen einsetzbar. Auch hier wäre eine kompaktere Bauform wünschenswert.

Der Erfindung liegt demnach die Aufgabe zugrunde, für das eingangs genannte Verfahren und die eingangs genannte Einrichtung bei gleicher Leistungsfähigkeit Möglichkeiten für einen noch kompakteren Aufbau aufzuzeigen.

Die Erfindung beruht auf der durch Erprobung bestätigten Erkenntnis, daß der erste und der zweite Kanal unter gewissen Randbedingungen funktional zu einem einzigen Kanal, also zu einem kombinierten Umwandlungs- und Mischkanal vereinigt, d.h. zusammengefaßt werden können; dieser kann parallel zum Reaktionskanal oder innerhalb des Reaktionskanals (bevorzugt zentral) angeordnet werden. Eine räumliche Trennung in drei Kanäle ist also überraschenderweise für die Funktion nicht erforderlich.

Das vorliegende Verfahren zeichnet sich demgemäß unter Lösung der gestellten Aufgabe erfindungsgemäß durch die folgenden Schritte aus:
a) Einleiten des Abgases in schräger Richtung an den Anlang eines kombinierten Umwandlungs- und Mischkanals, so daß das Abgas diesen Kanal in einer vorgegebenen Längsrichtung unter Wirbelbildung durchströmt,
b) Eindüsen eines z.B. flüssigen Reduktionsmittels, wie insbesondere wäßriger Harnstofflösung, in den Strom des Abgases im Anlang des Umwandlungs- und Mischkanals,
c) Umlenken des Stroms des Abgases aus dem Umwandlungs- und Mischkanal in einen dazu parallel angeordneten oder diesen außen umgebenden Reaktionskanal, so daß das Abgas nunmehr in Gegenrichtung strömt,
d) Reduzieren der reduzierbaren Abgaskomponenten des Abgases an einem Reduktionskatalysator im Reaktionskanal und
e) Ableiten des Stroms des nunmehr gereinigten Abgases aus dem Reaktionskanal.

Demgemäß ist unter Lösung der gestellten Aufgabe die vorliegende Einrichtung erfindungsgemäß ausgerüstet
a) mit einem kombinierten Umwandlungs- und Mischkanal mit einem Eingang für das Abgas am Anlang des Kombinierten Kanals, wobei dieser Kanal eine vorgegebene Längsrichtung für das durchströmende Abgas aufweist,
b) mit einer Abgas-Zuleitung, die schräg zur Längsrichtung ausgerichtet ist,
c) mit einer Eingabevorrichtung zum Einsprühen eines Reduktionsmittels in den Anlang des Umwandlungs- und Mischkanals,
d) mit einem parallel zu diesem angeordneten oder diesen außen umgebenden Reaktionskanal, der einen Reduktionskatalysator enthält,
e) mit einer Umlenkung zur Weiterleitung des Abgases vom Umwandlungs- und Mischkanal in den Reaktionskanal derart, daß das Abgas letzteren in Gegenrichtung durchströmt, und
f) mit einem Auslaß für das gereinigte Abgas zwecks Austritts aus dem Reaktionskanal.

Der Reaktionskanal kann also parallel zum und neben dem Umwandlungs- und Mischkanal angeordnet sein ("Paralleltyp"). Bei einer besonders bevorzugten Ausführungsform ist der Umwandlungs- und Mischkanal jedoch im mittleren Bereich, speziell zentral im Reaktionskanal angeordnet ("Zentraltyp"). Demgemäß ergibt sich eine Katalysator-Konstruktion mit Katalysator-Modulen, wobei im mittleren Bereich - bevorzugt zentral - ein vom Abgas durchströmbarer Innenkanal oder Umwandlungs- und Mischkanal gebildet ist. Gemäß einer weiteren Konstruktion ist vorgesehen ein Katalysator mit in p Zeilen und in q Spalten angeordneten Katalysator-Modulen, bei dem im mittleren Bereich - bevorzugt zentral - (m x n) Katalysator-Module zur Bildung eines Umwandlungs- und Mischkanals ausgespart sind, wobei m < p und n < q gilt. Gemäß einer anderen Konstruktion ist vorgesehen ein Katalysator von kreisringförmiger Gestalt, der aus einer Anzahl kreissegmentförmiger Katalysator-Module zusammengesetzt, dessen Innenbereich zur Bildung eines Umwandlungs- und Mischkanals von rundem Querschnitt vorgesehen und der in ein Gehäuse von runder Außenkontur einsetzbar ist. Gemäß einer weiteren Konstruktion ist eine außen abgerundete Gestalt vorgesehen, wobei quader- und kreissegmentförmige Module verwendet werden.

Weitere vorteilhafte Ausgestaltungen sind in den Unteransprüchen festgehalten.

Mit der Einrichtung nach der Erfindung läßt sich eine besonders kompakte Bauform erzielen, da nur zwei parallel zueinander oder nur zwei ineinander angeordnete Kanäle erforderlich sind. Das Bauvolumen im Verhältnis zum Katalysatorvolumen kann also klein gehalten werden. Infolge der recht einfachen, praktisch symmetrischen Strömungsverteilung bei bevorzugten Ausführungsformen läßt sich das angegebene Bauprinzip für verschiedene Baugrößen beibehalten. Es besteht also die "Möglichkeit zur Beibehaltung des Bauprinzips" ("Scale-up"), was aus Kostengründen sehr erstrebenswert ist.

Ausführungsbeispiele der Erfindung werden im folgenden anhand von sieben Figuren näher erläutert. Gleiche und entsprechende Bauteile sind mit denselben Bezugszeichen versehen. Es zeigen:
- Figur 1: eine katalytische Reinigungseinrichtung vom "Paralleltyp" mit zwei parallen Kanälen im Querschnitt (Schnitt A-A von Figur 2),
- Figur 2: die Reinigungseinrichtung von Figur 1 im Längsschnitt (Schnitt B-B von Figur 1),
- Figur 3: eine erste katalytische Reinigungseinrichtung vom "Zentraltyp" mit zwei zentral zueinander angeordneten Kanälen im Längsschnitt,
- Figur 4: die Reinigungseinrichtung von Figur 3 im Blick auf die Einströmseite,
- Figur 5: eine zweite katalytische Reinigungseinrichtung vom "Zentraltyp" mit zwei zentral zueinander angeordneten Kanälen im Längsschnitt,
- Figur 6: die Reinigungseinrichtung von Figur 5 im Querschnitt (Schnitt C-C von Figur 5),
- Figur 7: eine Anordnung von 72 quaderförmigen Katalysatormodulen im Reaktionskanal unter Freilassung eines rechteckigen zentralen Umwandlungs- und Mischkanals,
- Figur 8: eine Anordnung von 4 kreissegmentförmigen Katalysatormodulen im Reaktionskanal unter Freilassung eines runden zentralen Umwandlungs- und Mischkanals und
- Figur 9: eine Anordnung von 4 quaderförmigen und 4 kreissegmentförmigen Katalysatormodulen im Reaktionskanal unter Freilassung eines rechteckigen zentralen Umwandlungs- und Mischkanals.

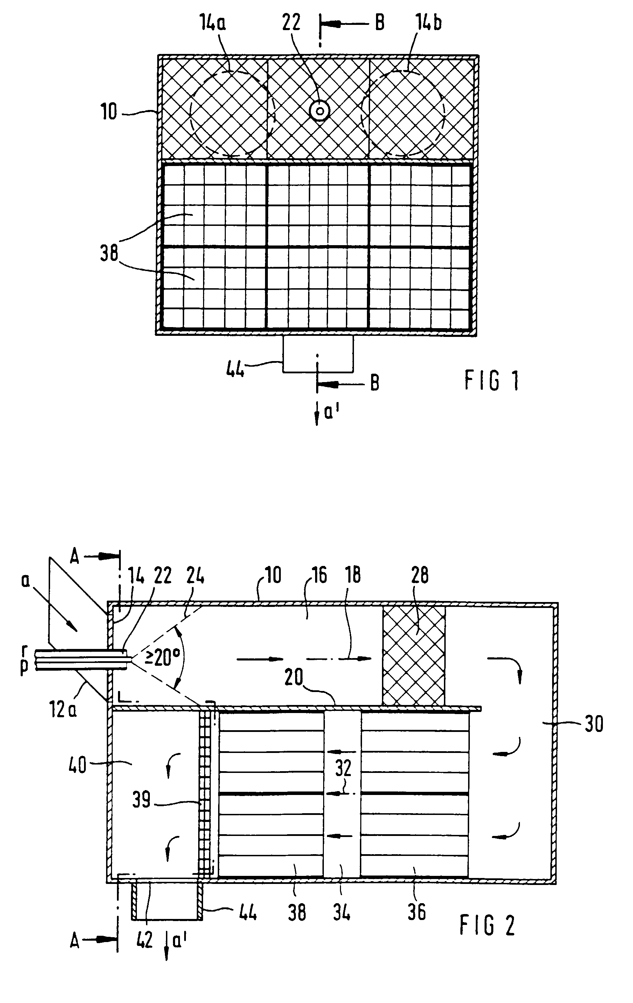

Nach den Figuren 1 und 2 besitzt eine Einrichtung zum katalytischen Reinigen des Abgases a aus einer Verbrennungsanlage ein quaderförmiges Gehäuse 10. In dieses Gehäuse 10 führen zwei Zuleitungen 12a, 12b für das Abgas a, das eine Temperatur von 200 bis 500 °C aufweisen kann. Lediglich die Abgas-Zuleitung 12a ist aus Figur 2 ersichtlich.

Zur Verdeutlichung sind in Figur 1 die Eingangsöffnungen 14a und 14b der beiden Abgas-Zuleitungen 12a bzw. 12b gestrichelt eingezeichnet. Der Eingang ist allgemein mit 14 bezeichnet. Die beiden Eingangsöffnungen 14a, 14b führen in eine breite, langgestreckte Eindüskammer, die im folgenden als Umwandlungs- und Mischkanal 16 bezeichnet wird. Dieser Kanal 16 besitzt einen quaderförmigen Querschnitt. Seine Längsrichtung ist mit 18 bezeichnet. Es ist erkennbar, daß die beiden Abgas-Zuleitungen 12a, 12b schräg zur Längsrichtung 18 ausgerichtet sind. Im Ausführungsbeispiel sind sie auch schräg und gegensinnig zur Papierebene ausgerichtet, um im einströmenden Abgas a einen Eingangsdrall zu erzeugen. Zur Bildung des Umwandlungs- und Mischkanals 16 dient auch eine sich in Längsrichtung 18 erstreckende Zwischenwand 20.

Am Anfang dieses Kanals 16, und zwar symmetrisch zwischen den beiden Eingangsöffnungen 14a und 14b, befindet sich zentral als Eingabevorrichtung eine Zweistoff-Zerstäuberdüse 22. Sie wird mit einem Reduktionsmittel r, insbesondere mit wäßriger Harnstofflösung, und mit einem Zerstäubermittel p, insbesondere mit Preßluft, betrieben. Der beim Betrieb erzeugte Sprühkegel ist mit 24 bezeichnet. Er kann einen Kegelwinkel von 10 bis 40°, vorzugsweise von über 20°, besitzen. Die Zweistoff-Zerstäuberdüse 22 läßt sich dabei durch Wahl von Sprühkegel, Tröpfchendurchmesser, Wurfweite und Verdampfungsstrecke so anpassen, daß im Umwandlungs- und Mischkanal 16 eine weitgehende Umwandlung des Harnstoffs in Ammoniak, eine Verdampfung desselben sowie eine Vermischung mit dem einströmenden Abgas a stattfindet.

Im Umwandlungs- und Mischkanal 16 kann fakultativ ein Hydrolysekatalysator 28 untergebracht sein. Er wird insbesondere dann eingebaut, wenn infolge der erforderlichen Mindest-Verweildauer des Harnstoffs und bedingt durch andere Verfahrensparameter die Länge des kombinierten Umwandlungs- und Mischkanals 16 bei Beachtung einer vollständigen Reaktion zu lang werden würde. Dieser Hydrolysekatalysator 28 bewirkt ebenfalls eine gewisse Vermischung der einströmenden Substanzen, so daß man nach seinem Einbau mit einer verringerten Länge des Umwandlungs- und Mischkanals 16 auskommt. Wichtig ist, daß am Ende des Umwandlungs- und Mischkanals 16 der Harnstoff praktisch vollständig in Ammoniak umgewandelt ist.

Am Ende dieses Kanals 16 ist eine erste Umlenkung 30 angeordnet. In dieser ersten Umlenkung 30 können (nicht gezeigte) Umlenk-Einrichtungen oder Umlenk-Bleche vorgesehen sein. Die erste Umlenkung 30 bewirkt eine Umlenkung der strömenden Substanzen in die Gegenrichtung 32, also eine Umkehr um 180°.

Die umgelenkten Substanzen treten in einen Reaktionskanal 34 ein. In diesem Reaktionskanal 34 ist mindestens ein Reduktionskatalysator 36, insbesondere ein SCR-Katalysator, untergebracht. Vorliegend sind dort zwei im Abstand zueinander angeordnete Reduktionskatalysatoren 36, 38 (Katalysatorblöcke) eingebaut, deren Längskanäle in der Gegenrichtung 32 von den aufgegebenen Substanzen durchströmt werden. Die Reduktionskatalysatoren 36, 38 dienen dabei in bekannter Weise zur Umwandlung unerwünschter Bestandteile oder Komponenten des Abgases a, also insbesondere zur Vernichtung der schädlichen Stickoxide NOₓ.

Wichtig für den kompakten Aufbau des Gehäuses 10 ist es, daß die Strömungsrichtung 18 des Abgases a im Umwandlungs- und Mischkanal 16 umgekehrt zur Strömungsrichtung 32 im Reaktionskanal 34 und damit in den Reduktionskatalysatoren 36, 38 verläuft.

Der Reduktionskatalysator 38 ist, ebenso wie der Reduktionskatalysator 36, im Ausführungsbeispiel aus sechs aufeinandergesetzten gleichartigen Modulen aufgebaut. Dies geht aus Figur 1 hervor.

Dem zweiten Reduktionskatalysator 38 kann sich mit oder ohne Abstand ein Oxidationskatalysator 39 gleicher Querschnittsabmessung anschließen. Dieser Oxidationskatalysator 39 dient der Umwandlung von CO, von CₙHₙ sowie anderer oxidierbarer Abgasbestandteile.

An den Ausgang des Reaktionskanals 34 schließt sich eine zweite Umlenkung 40 an. Diese bewirkt eine Umlenkung um 90° in Richtung auf eine Austrittsöffnung 42, an der sich ein Auslaß 44 für das gereinigte Abgas a' befindet.

Es soll hier noch einmal festgehalten werden: Der Umwandlungs- und Mischkanal 16 dient hier als Verdampfungs-, Misch- und Umwandlungsstrecke. Es sind in diesem Kanal 16 keine statischen Mischer vorhanden oder erforderlich, um das verdampfende Ammoniak NH₃ mit dem Abgas a intensiv zu vermischen. Dies wird als bedeutsamer Vorteil angesehen. Dennoch ist eine Reaktion sowie eine gleichmäßige Vermischung von eingesprühtem Reduktionsmittel r und Abgas a sichergestellt.

Von Bedeutung ist auch, daß die beiden Abgas-Zuleitungen 12a, 12b symmetrisch zur Längsrichtung 18 des Umwandlungs- und Mischkanals 16 angeordnet sind. Hieraus resultiert letztendlich eine gute Vermischung der besagten Komponenten a, p und r.

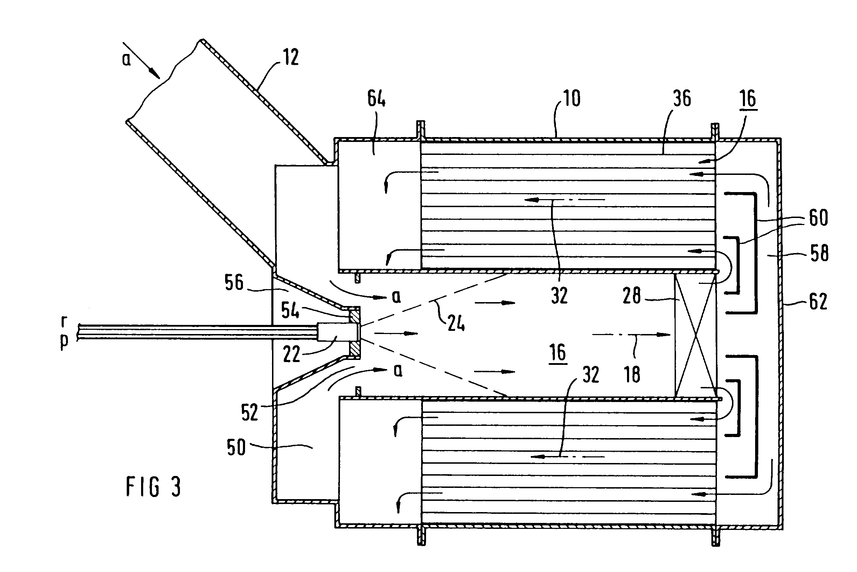

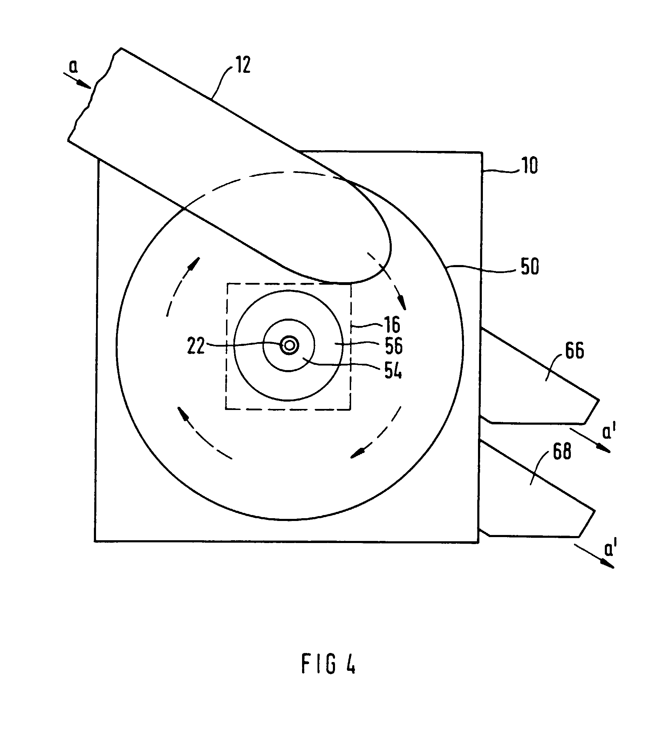

In den Figuren 3 und 4 ist eine bevorzugte Ausführungsform einer katalytischen Reinigungseinrichtung mit Einströmung des Abgases a in einen zentralen ersten Kanal und mit Rückströmung durch einen dazu außengelegenen zweiten Kanal dargestellt. Bei dieser Ausführungsform führt eine Einström- oder Abgas-Zuleitung 12 schräg in eine ringförmige Vorkammer 50. Die Vorkammer 50 könnte auch kreisscheibenförmig ausgebildet sein. Wie insbesondere aus Figur 4 hervorgeht, ist die Abgas-Zuleitung 12 schräg angeordnet, und zwar so, daß das Abgas a innerhalb der Vorkammer 50 in eine rotierende Bewegung bezüglich der Längsrichtung 18 versetzt wird. Die ringförmige Vorkammer 50 besitzt zentral zur Längsrichtung 18 eine ringförmige Auslaßöffnung 52, die mit Hilfe einer Montagewand 54 gebildet wird. Die Auslaßöffnung 52 ist gleichzeitig der Einlaß für den Kanal 16. An der Montagewand 54 ist eine Eingabeeinrichtung 22, und zwar eine Zweistoff-Zerstäuberdüse für Reduktionsmittel r und Zerstäubermittel p, befestigt. Der Sprühkegel der Zerstäuberdüse 22 ist wiederum mit 24 bezeichnet. Der Aufbau ist so vorgenommen, daß außen ein gewisser Freiraum 56 für die Montage vorhanden ist. Über die Auslaßöffnung 52 strömt das Abgas a in den Umwandlungs- und Mischkanal 16 und vermischt sich dort mit dem zerstäubten Reduktionsmittel r.

Im Umwandlungs- und Mischkanal 16 kann auch hier wieder optional ein Hydrolysekatalysator 28 untergebracht sein.

Am Ende des Umwandlungs- und Mischkanals 16 befindet sich auch hier eine Umlenkung oder Umlenkkammer 58. Sie greift über einen ringförmigen Reaktionskanal 34, der den Umwandlungs- und Mischkanal 16 außen umgibt und der praktisch vollständig mit einem Reduktionskatalysator 36 gefüllt ist. Dessen Längskanäle verlaufen parallel zur Längsrichtung 18. Zur Führung des Gasgemisches können in der Umlenkkammer 58 Umlenkplatten oder Umlenkführungen 60 vorhanden sein. Der Kanal 16 kann durch eine röhrenförmige Blechwand 61 gebildet werden. Unter Berücksichtigung gewisser konstruktiver Voraussetzungen betreffend die Halterung des Reaktionskatalysators 36 kann die Blechwand 61 entfallen. Das Gas im Kanal 16 ist dann bereits dem katalytischen Material an der Außenseite des Katalysators 36 ausgesetzt.

Die Rückwand 62 der Umlenkkammer 58 sowie der Umwandlungs- und Mischkanal 16, vorliegend also die Blechwand 61, können innen mit einer katalytisch aktiven Oberfläche beschichtet sein. Ebenso können die Umlenkführungen 60 mit einer solchen katalytisch aktiven Schicht belegt sein. Dabei kann es sich um eine hydrolysekatalytische oder SCR-katalytische Schicht handeln. Es hat sich gezeigt, daß durch eine solche Beschichtung an diesen Stellen ein Niederschlag aus Feststoffen und damit ein Verstopfen vermieden werden kann.

Nach Durchströmen des Umwandlungs- und Mischkanals 16, der ringförmig mit einem rechteckigen oder runden Querschnitt ausgebildet sein kann, gelangt das Gasgemisch in eine ringförmige Abströmkammer 64 von gleicher Geometrie. Diese Abströmkammer 64 ist vorliegend mit zwei Abströmkanälen oder Auslässen 66, 68 versehen; man würde prinzipiell auch mit einem Auslaß auskommen. Von hier kann das katalytisch gereinigte Abgas a', gegebenenfalls über weitere Apparate (wie Wärmetauscher, Nachschalldämpfer) im Abgas-Kanal, zu einem Auspuff oder Kamin geführt werden.

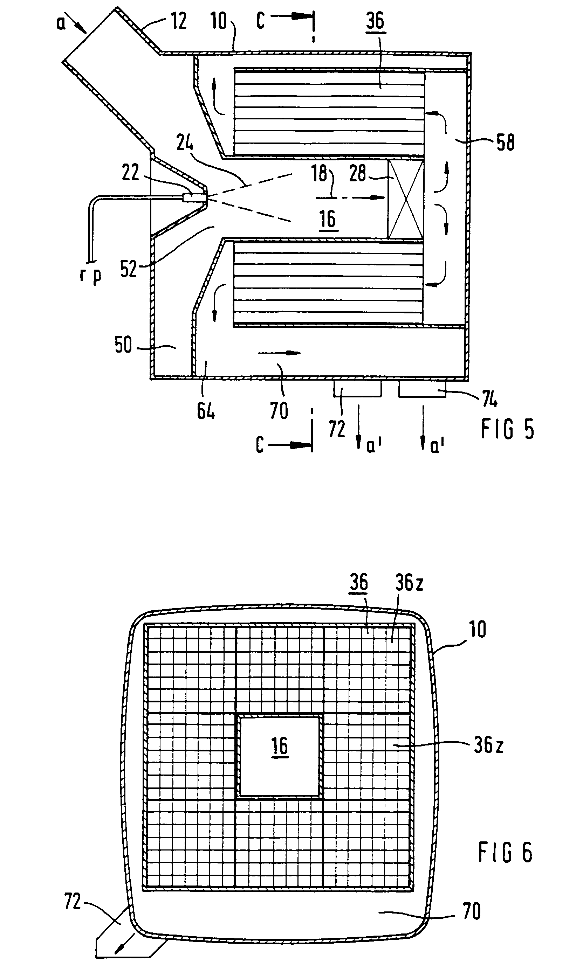

Die Ausführungsform nach den Figuren 5 und 6 entspricht weitgehend derjenigen von Figur 3 und 4. Allerdings ist hier die Austritts- oder Abströmkammer 64 nicht direkt mit einem oder mehreren Auslässen versehen. Vielmehr erfolgt an der Austrittskammer 64 eine weitere Umlenkung. Mit anderen Worten: Die Austrittskammer 64 ist so konzipiert, daß der Gasstrom parallel zur Längsrichtung 18 umgelenkt wird, und zwar in eine Schalldämpfungskammer 70. Die Schalldämpfungskammer 70 ist ein Ringraum, der außerhalb des Kanals 16 mit dem SCR-Katalysator 36 liegt. Diese Schalldämpfungskammer 70 ist vorliegend mit zwei Abgasaustritten oder Auslässen 72, 74 versehen, aus denen das gereinigte Abgas a' abgeführt wird. Prinzipiell würde auch hier ein Auslaß genügen. Die Außenwand des Gehäuses 10 kann zusätzlich mit einem (nicht gezeigten) schallabsorbierenden Material belegt sein, um die Wirkung der Schalldämpfungskammer 70 zu verstärken.

Auch im vorliegenden Fall kann eine katalytisch aktive Beschichtung, insbesondere eine SCR-Beschichtung, in der Umlenkkammer 58 und im Umwandlungs- und Mischkanal 16 vorgesehen sein.

Bei der Zweistoff-Zerstäuberdüse 22 für Reduktionsmittel r und Zerstäubermittel p kann es sich auch vorliegend um eine handelsübliche Düse handeln, deren Sprühkegel 24 einen vorgegebenen Sprühwinkel bildet. Sie sollte bezüglich des Gehäuses 10 thermisch isoliert sein. Infolge des Dralls, den das Abgas auch vorliegend um die Längsachse 18 erfährt, wird eine gute Durchmischung herbeigeführt.

Auch im vorliegenden Fall ist der SCR-Katalysator 36 aus einzelnen Modulen aufgebaut. Dies wird besonders aus Figur 6 deutlich. Danach sind insgesamt (3 x 3) - 1 = 8 solcher Module mit Standardmaß vorgesehen. Die Module haben jeweils einen rechteckigen, speziell einen quadratischen Querschnitt. Statt dessen kann auch eine rotationssymmetrische Anordnung gewählt werden. Infolge der hier vorgegebenen Modulbauweise besitzt auch der Umwandlungs- und Mischkanal 16 im rechten Teil einen rechteckigen, hier speziell einen quadratischen Querschnitt. Am linken Teil kann nach Figur 6 der Eingangsbereich (Kammer 50) rund oder abgerundet sein. Die Strömung geht also - in Strömungsrichtung gesehen - von einen runden in einen eckigen Querschnitt über. Die dargestellte Einrichtung zur Reinigung des Abgases a ist insbesondere für den Einsatz in Verbindung mit dem Dieselmotor eines Lastkraftwagens konzipiert.

Zum Reduktionskatalysator 36 soll noch folgendes angemerkt werden: Es kann sich dabei um jeweils aufeinander gestapelte einzelne Module (wie gezeigt) oder um mehrere hintereinander angeordnete Module handeln. Die einzelnen Module können bei der Hintereinanderanordnung einen Zwischenraum besitzen, was in Figur 2 bereits gezeigt wurde. Die Zwischenräume können unterschiedliche Katalysatoren voneinander trennen. Beispielsweise kann jeweil zunächst ein SCR- und danach ein Oxidations-Katalysator-Modul eingesetzt sein.

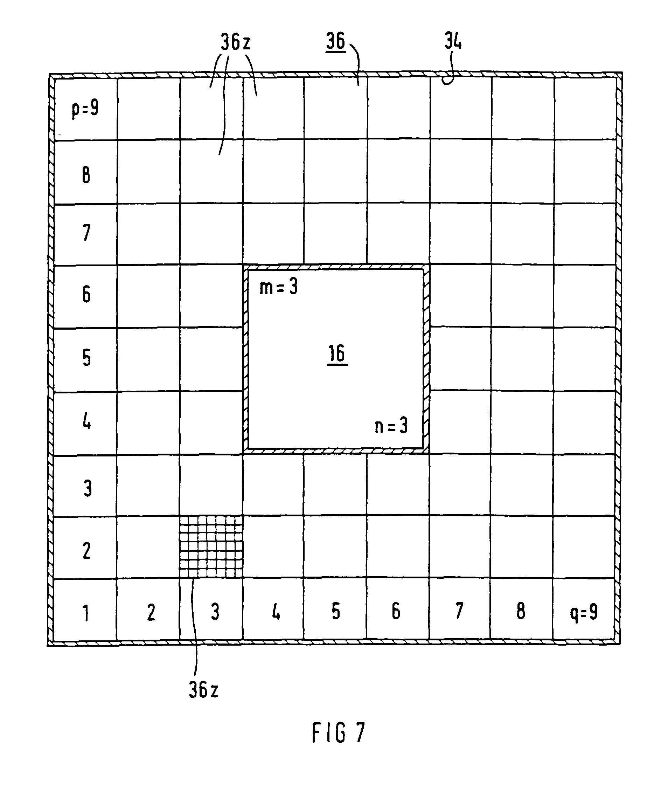

Aus Figur 7 ergibt sich ein etwas anders gearteter Aufbau des Katalysators 36. Hierbei sind Module in p = 9 Zeilen und q = 9 Spalten angeordnet. In der Mitte (hier liegt ein zentraler Aufbau vor) ist ein Raum für den Umwandlungs- und Mischkanal 16 freigelassen. Dafür sind (m x n) = 3 x 3 Module ausgespart, so daß insgesamt (p x q) - (m x n) = 9 x 9 - 9 = 72 Module über den Querschnitt des Reaktionskanals 34 angeordnet sind.

Natürlich sind alternativ auch Anordnungen mit 3 x 3 - 1 = 8, 4 x 4 - 2 x 2 = 12, 5 x 5 - 3 x 3 = 16, 6 x 6 - 2 x 2 = 32, 7 x 7 - 3 x 3 = 40, 8 x 8 - 4 x 4 = 48, 10 x 10 - 4 x 4 = 84 usw. Katalysator-Modulen einsetzbar. Hierbei ist jeweils p = q und m = n gewählt. Darüber hinaus sind nicht nur quadratische, sondern grundsätzlich auch andere rechteckige Bauformen möglich, z.B. mit (7 x 5) - (3 x 3) = 26 Modulen. Es kann also auch p ≠ q und/oder m ≠ n gewählt sein.

Hieraus wird deutlich, daß ein rechteckiger Aufbau generell von der Konfiguration (p x q) - (m x n) (mit p > m, q > n und p, q, m, n jeweils ganze Zahlen) sein kann. Der Kanal 36, für den die (m x n) Module ausgespart sind, ist bevorzugt zentral angeordnet ("zentraler Aufbau"); er muß aber nicht zentral liegen.

Zu betonen ist aber auch, daß eine insgesamt runde oder auch abgerundete Bauform für den Katalysator 36 und damit für das Gehäuse 10 möglich ist. Mit anderen Worten: Diese Bauform kann einen durchgängig runden oder viereckigen Innenkanal 16, einen oder mehrere ringförmige Katalysatoren 36 sowie eine runde Außenkontur aufweisen. Der ringförmige Katalysator 16 ist dann zweckmäßigerweise aus einer Anzahl von segmentförmigen Katalysatormodulen zusammengesetzt. Beispielsweise kann er aus vier Viertelkreis-Segmenten zusammengesetzt sein.

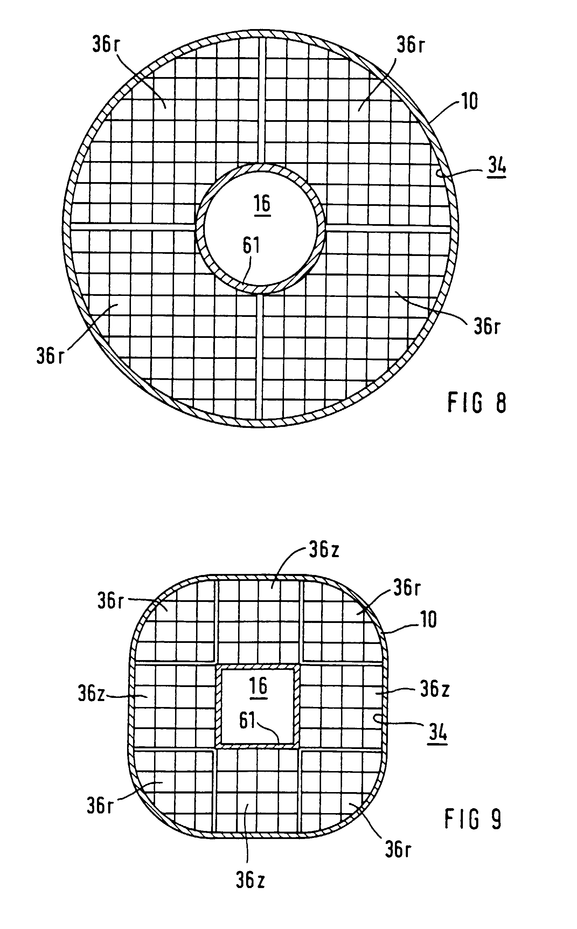

Zu Figur 8 ist ein zentraler runder Kanal 16 vorgesehen. Im umgebenden Kanal 34, der zwischen der rohrförmigen Blechwand 61 und dem Mantel oder Gehäuse 10 gebildet wird, liegen vier gleiche viertelkreissegmentförmige Katalysatormodule 36r. Es können abweichend davon auch mehr Module 36r verwendet werden, beispielsweise acht Module 36r, die sich jeweils über 45 ° erstrecken. In den Räumen zwischen den einzelnen Modulen 36r ist bevorzugt ein Kleber oder Dichtmaterial, z. B. ein Keramik-Faser-Material, untergebracht. Auch können Quellmatten verwendet werden. Diese würden dann die Module 36r in radialer Richtung umgeben. Die dargestellte runde Bauform hat gute Festigkeitseigenschaften.

In Figur 9 handelt es sich dagegen um eine abgerundete Bauform. Hier besteht der Katalysator 36 aus vier gleichen rechteckigen Katalysatormodulen 36z und vier gleichen viertelkreissegmentförmigen Katalysatormodulen 36r, die jeweils abwechselnd angeordnet sind. Größere Ausführungen können mehr Module 36z und 36r umfassen. Beispielsweise können auch hier p > 3 Zeilen (z. B. p = 12) und q > 3 Spalten (z. B. p = 12) vorgesehen sein. In den Ecken befinden sich dann jeweils ein viertelkreissegmentförmiges Modul 36 r oder mehrere segmentförmige Module 36r. Die Lücken zwischen den Modulen 36r können ebenfalls mit einen Kleber oder Dichtmaterial gefüllt sein. Auch können Quellmatten eingesetzt werden. Auch diese Ausführungsformen mit abgerundeten Ecken sind besonders stabil gegen mechanische Beanspruchung.

Die Katalysator-Anordnungen von Figur 7 bis 9 können insbesondere für größere Anlagen verwendet werden.

Durch die zentral-symmetrische Konstruktion der in den Figuren 3 bis 9 dargestellten Ausführungsformen ergeben sich folgende Vorteile:
- Gute Vermischung des Reduktionsmittels mit dem Abgas;
- Gute Gleichverteilung des mit dem Reduktionsmittel versetzten Abgases auf den/die Katalysator(en);
- Möglichkeit zur Beibehaltung des Bauprinzips bei unterschiedlichen Baugrößen (scale-up);
- Möglichkeit zum modularen Aufbau in gestuften Baugrößen gleichen Bauprinzips, Verwendung baugleicher Komponenten (insbesondere von Katalysator-Baumodulen, von Umwandlungs- und Mischkanälen);
- Möglichkeit zum Einbau eines Hydrolyse-Katalysators im (zentralen) Einströmbereich (SCR-Verfahren mit Harnstoff); - Möglichkeit zur Anbringung von Umlenkführungen 60;
- Möglichkeit zur Ausführung der Umlenkführungen 60 oder der Rückwand 62 mit katalytisch aktiven Oberflächen, z.B. zur Hydrolyse oder zur sonstigen katalytischen Abgasreinigung;
- Möglichkeit zur Anordnung von Kombikatalysatoren im Ringraum 16, z.B. von SCR- und Oxidationskatalysatoren;
- gute Schalldämpfung durch Umlenkung an Rückwand 62 und/oder Umlenkführung 60 und mehrfache Querschnittsänderung/ Reflexionsflächen. Möglichkeit zur Anbringung zusätzlicher schalldämpfender Einbauten oder zur Gestaltung der Strömungskanäle so, daß die Wirkung eines Reflexionsschalldämpfers durch Interferenzbildung erzielt wird;
- Einsatz einer Zweistoff-Zerstäuberdüse 22 mit angepaßtem Sprühwinkel (ca. 10° bis 40°) zur Eindüsung eines Reduktionshilfsstoffes, z.B. von Ammoniak oder Harnstoff oder eines anderen NH₃ freisetzenden Reduktionsmittels;
- Kleinhaltung von Wärmeverlusten durch starke Reduzierung an äußerer Oberfläche infolge kompakten Aufbaus;
- Vergleichmäßigung der Temperatur an der für die Hydrolyse kritischen Stelle, nämlich nach der Eindüsung;
- kompakte Bauweise durch Anordnung des Umwandlungs- und Mischkanals im Zentrum des Katalysatorraums; und
- gute Vermischung und guter Reaktionsumsatz, da jede Umlenkung des Abgases a einen Mischungseffekt bewirkt.

## Patentansprüche

1. Verfahren zum Reinigen des Abgases (a) aus einer Verbrennungsanlage für einen festen, flüssigen oder gasförmigen Brennstoff mit den folgenden Schritten:
a) Einleiten des Abgases (a) in schräger Richtung an den Anlang eines kombinierten Umwandlungs- und Mischkanals (16), so daß das Abgas (a) diesen Kanal (16) in einer vorgegebenen Längsrichtung (18) unter Wirbelbildung durchströmt,
b) Eindüsen eines z.B. flüssigen oder gasförmigen Reduktionsmittels (r), wie insbesondere wäßriger Harnstofflösung oder gasförmigen Ammoniaks, in den Strom des Abgases (a) im Anlang des Umwandlungs- und Mischkanals (16), wobei das Reduktionsmittel (r) mit dem Abgas (a) vermischt und gleichzeitig umgewandelt wird,
c) Umlenken des Stroms des Abgases (a) aus dem Umwandlungs- und Mischkanal (16) in einen dazu parallel angeordneten oder diesen außen umgebenden Reaktionskanal (34), so daß das Abgas (a) nunmehr in Gegenrichtung (32) strömt,
d) Reduzieren der reduzierbaren Abgaskomponenten des Abgases (a) an einem Reduktionskatalysator (36, 38) im Reaktionskanal (34) und
e) Ableiten des Stroms des nunmehr gereinigten Abgases (a') aus dem Reaktionskanal (34).

2. Verfahren nach Anspruch 1,
**dadurch gekennzeichnet**, daß das im Reaktionskanal (34) strömende Abgas (a) dort zusätzlich einem Oxidationskatalysator (39) ausgesetzt wird.

3. Verfahren nach Anspruch 1 oder 2,
**dadurch gekennzeichnet**, daß das im Umwandlungs- und Mischkanal (16) strömende Abgas (a) dort einem Hydrolysekatalysator (28) ausgesetzt wird.

4. Einrichtung zum Reinigen des Abgases (a) aus einer Verbrennungsanlage für einen festen, flüssigen oder gasförmigen Brennstoff
a) mit einem kombinierten Umwandlungs- und Mischkanal (16) mit einem Eingang (14; 52) am Anlang des Kombinierten Kanals (16) für das Abgas (a) und einer vorgegebenen Längsrichtung (18) für das durchströmende Abgas (a),
b) mit einer Abgas-Zuleitung (12, 12a, 12b), die schräg zur Längsrichtung (18) ausgerichtet ist,
c) mit einer Eingabevorrichtung (22) zum Einsprühen eines Reduktionsmittels (r) in den Anlang des Umwandlungs- und Mischkanals (16),
d) mit einem parallel dazu angeordneten oder diesen außen umgebenden Reaktionskanal (34), der einen Reduktionskatalysator (36, 38) enthält,
e) mit einer Umlenkung (30, 58) zur Weiterleitung des Abgases (a) vom Umwandlungs- und Mischkanal (16) in den Reaktionskanal (34) derart, daß das Abgas (a) diesen in Gegenrichtung (32) durchströmt, und
f) mit einem Auslaß (44; 66, 68; 72, 74) für das gereinigte Abgas (a') zwecks Austritts aus dem Reaktionskanal (34).

5. Einrichtung nach Anspruch 4,
**dadurch gekennzeichnet**, daß die Eingabevorrichtung (22) eine Zweistoff-Zerstäuberdüse für wäßrigen Harnstoff und Druckluft ist, die bevorzugt zentral am Eingang (14; 52) des Umwandlungs- und Mischkanals (16) angeordnet ist.

6. Einrichtung nach Anspruch 4 oder 5,
**dadurch gekennzeichnet**, daß am Ende des Reaktionskanals (34) vor dem Auslaß (44; 66, 68; 72, 74) eine weitere Umlenkung (40, 64) vorgesehen ist.

7. Einrichtung nach einem der Ansprüche 4 bis 6,
**dadurch gekennzeichnet**, daß im Reaktionskanal (34) ein Oxidationskatalysator (39) vorgesehen ist.

8. Einrichtung nach einem der Ansprüche 4 bis 7,
**dadurch gekennzeichnet**, daß im Umwandlungs- und Mischkanal (16), im Bereich der Umlenkung (30, 58) oder im Reaktionskanal (34) vor dem Reduktionskatalysator (36, 38) ein Hydrolysekatalysator (28) vorgesehen ist.

9. Einrichtung nach einem der Ansprüche 4 bis 8,
**dadurch gekennzeichnet**, daß der Umwandlungs- und Mischkanal (16) zentral im Reaktionskanal (34) angeordnet ist.

10. Einrichtung nach einem der Ansprüche 4 bis 9,
**dadurch gekennzeichnet**, daß der Reduktionskatalysator (36, 38), vorzugsweise ein SCR-Katalysator, aus einzelnen quaderförmigen oder kreissegmentförmigen Modulen (36z;36r) aufgebaut ist, und daß der Umwandlungs- und Mischkanal (16) einen rechteckigen bzw. runden oder aber an den Ecken abgerundeten Querschnitt besitzt.

11. Einrichtung nach einem der Ansprüche 4 bis 10,
**dadurch gekennzeichnet**, daß dem Eingang (52) des Umwandlungs- und Mischkanals (16) eine scheiben- oder ringförmige Vorkammer (50) vorgeordnet ist.

12. Einrichtung nach einem der Ansprüche 4 bis 10,
**dadurch gekennzeichnet**, daß als Eingang (14) des Umwandlungs- und Mischkanals (16) mindestens zwei Einlaßöffnungen (14a, 14b) für das Abgas (a) vorgesehen sind.

13. Einrichtung nach einem der Ansprüche 4 bis 12,
**dadurch gekennzeichnet**, daß die Umlenkung (30, 58) eine katalytisch aktive Oberfläche aufweist.

14. Einrichtung nach einem der Ansprüche 6 bis 13,
**dadurch gekennzeichnet**, daß die weitere Umlenkung (40, 64) eine katalytisch aktive Oberfläche aufweist.

15. Einrichtung nach einem der Ansprüche 4 bis 14,
**dadurch gekennzeichnet**, daß der Reaktionskanal (34) mit Mitteln (70) zur Schalldämpfung versehen ist.

## Claims

1. Process for cleaning the exhaust gas (a) from a combustion plant for a solid, liquid or gaseous fuel having the following steps:
a) introducing the exhaust gas (a) in an oblique direction at the beginning of a combined conversion and mixing duct (16), so that the exhaust gas (a) flows through this duct (16) in a preset longitudinal direction (18), with vortex formation,
b) injecting, for example, a liquid or gaseous reducing agent (r), such as preferably aqueous urea solution, or gaseous ammonia, into the exhaust gas stream (a) in the beginning of the conversion and mixing duct (16), the reducing agent (r) being mixed with the exhaust gas (a) and at the same time being converted,
c) deflecting the exhaust gas (a) stream from the conversion and mixing duct (16) into a reaction duct (34) arranged in parallel thereto or externally surrounding this, so that the exhaust gas (a) then flows in the opposite direction (32),
d) reducing the reducible exhaust gas components of the exhaust gas (a) on a reduction catalyst (36, 38) in the reaction duct (34) and
e) discharging the stream of the then cleaned exhaust gas (a') from the reaction duct (34).

2. Process according to Claim 1, characterized in that the exhaust gas (a) flowing in the reaction duct (34) is exposed there additionally to an oxidation catalyst (39).

3. Process according to Claim 1 or 2, characterized in that the exhaust gas (a) flowing in the conversion and mixing duct (16) is exposed there to a hydrolysis catalyst (28).

4. Device for cleaning the exhaust gas (a) from a combustion plant for a solid, liquid or gaseous fuel equipped
a) with a combined conversion and mixing duct (16) having an inlet (14; 52) at the beginning of the combined duct (16) for the exhaust gas (a) and having a preset longitudinal direction (18) for the exhaust gas (a) flowing through,
b) with an exhaust-gas feed line (12, 12a, 12b) which is aligned obliquely to the longitudinal direction (18),
c) with a feed apparatus (22) for injecting a reducing agent (r) into the beginning of the conversion and mixing duct (16),
d) with a reaction (34) duct arranged in parallel thereto or externally surrounding this, which reaction duct contains a reducing catalyst (36, 38),
e) with a deflection (30, 58) for passing on the exhaust gas (a) from the conversion and mixing duct (16) into the reaction duct (34) in such a manner that the exhaust gas (a) flows through this in the opposite direction (32), and
f) with an outlet (44; 66, 68; 72, 74) for the cleaned exhaust gas (a') for outflow from the reaction duct (34).

5. Device according to Claim 4, characterized in that the feed apparatus (22) is a two-component atomizing nozzle for aqueous urea and compressed air which is preferably arranged centrally at the intake (14; 52) of the conversion and mixing duct (16).

6. Device according to Claim 4 or 5, characterized in that a further deflection (40, 64) is provided at the end of the reaction duct (34) upstream of the outlet (44; 66, 68; 72, 74).

7. Device according to one of Claims 4 to 6, characterized in that an oxidation catalyst (39) is provided in the reaction duct (34).

8. Device according to one of Claims 4 to 7, characterized in that a hydrolysis catalyst (28) is provided in the conversion and mixing duct (16) in the area of the deflection (30, 58) or in the reaction duct (34) upstream of the reduction catalyst (36, 38).

9. Device according to one of Claims 4 to 8, characterized in that the conversion and mixing duct (16) is arranged centrally in the reaction duct (34).

10. Device according to one of Claims 4 to 9, characterized in that the reduction catalyst (36, 38), preferably an SCR catalyst, is made up of individual parallelepipedal or circular-segment modules (36z; 36r), and in that the conversion and mixing duct (16) has a rectangular or round cross-section, or else a cross-section rounded at the corners.

11. Device according to one of Claims 4 to 10, characterized in that a disc-shaped or annular prechamber (50) is arranged upstream of the intake (52) of the conversion and mixing duct (16).

12. Device according to one of Claims 4 to 10, characterized in that at least two inlet orifices (14a, 14b) for the exhaust gas (a) are provided as intake (14) of the conversion and mixing duct (16).

13. Device according to one of Claims 4 to 12, characterized in that the deflection (30, 58) has a catalytically active surface.

14. Device according to one of Claims 6 to 13, characterized in that the further deflection (40, 64) has a catalytically active surface.

15. Device according to one of Claims 4 to 14, characterized in that the reaction duct (34) is provided with means (70) for silencing.

## Revendications

1. Procédé d'épuration des gaz (a) d'échappement d'une installation de combustion pour un combustible solide, liquide ou gazeux, comportant les étapes suivantes :
a) introduction des gaz (a) d'échappement en direction oblique au début d'un conduit (16) combiné de transformation et de mélange, de sorte que les gaz (a) d'échappement passe dans ce conduit (16) dans une direction (18) longitudinale prescrite, avec tourbillonnement,
b) injection d'un réducteur (r) liquide ou gazeux, comme notamment une solution aqueuse d'urée ou de gaz ammoniac, dans le flux de gaz (a) d'échappement au début du conduit (16) de transformation et de mélange, le réducteur (r) étant mélangé aux gaz (a) d'échappement et en même temps transformé,
c) renvoi du flux de gaz (a) d'échappement quittant le conduit (16) de transformation et de mélange dans un conduit (34) de réaction disposé parallèlement au conduit (16) ou l'entourant extérieurement, de sorte que les gaz (a) d'échappement passe maintenant en sens (32) contraire,
d) réduction des constituants réductibles des gaz (a) d'échappement sur un pot (36, 38) catalytique de réduction dans le conduit (34) de réaction, et
e) évacuation du conduit (34) de réaction du flux de gaz (a') d'échappement maintenant épurés.

2. Procédé suivant la revendication 1, **caractérisé** en ce que les gaz (a) d'échappement s'écoulant dans le conduit (34) de réaction y sont en outre exposés à un pot (39) catalytique d'oxydation.

3. Procédé suivant la revendication 1 ou 2, **caractérisé** en ce que les gaz (a) d'échappement passant dans le conduit (16) de transformation et de mélange y sont exposés à un pot (28) catalytique d'hydrolyse.

4. Dispositif d'épuration des gaz (a) d'échappement d'une installation de combustion pour un combustible solide, liquide ou gazeux, comportant :
a) un conduit (16) combiné de transformation et de mélange, pourvu d'une entrée (14 ; 52) pour les gaz (a) d'échappement au début du conduit (16) combiné, et d'une direction (18) longitudinale prescrite pour les gaz (a) d'échappement qui passent dans le conduit,
b) une conduite (12, 12a, 12b) d'amenée des gaz d'échappement, qui est orientée en oblique par rapport à la direction (18) longitudinale,
c) un dispositif (22) d'introduction pour injecter un réducteur (r) au début du conduit (16) de transformation et de mélange,
d) un conduit (34) de réaction, qui est disposé parallèlement au conduit (16) ou l'entoure extérieurement et qui contient un pot (36, 38) catalytique,
e) un renvoi (30, 58) pour faire passer les gaz (a) d'échappement du conduit (16) de transformation et de mélange dans le conduit (34) de réaction de telle sorte que les gaz (a) d'échappement passent dans le conduit (34) en sens (32) contraire, et
f) une évacuation (44 ; 66, 68 ; 72, 74) pour les gaz (a') d'échappement épurés, pour leur faire quitter le conduit (34) de réaction.

5. Dispositif suivant la revendication 4, **caractérisé** en ce que le dispositif (22) d'introduction est une buse de pulvérisation binaire pour une solution aqueuse d'urée et de l'air comprimé, qui est de préférence disposée centralement à l'entrée (14 ; 52) du conduit (16) de transformation et de mélange.

6. Dispositif suivant la revendication 4 ou 5, **caractérisé** en ce qu'un autre renvoi (40, 64) est prévu à la fin du conduit (34) de réaction, avant l'évacuation (44 ; 66, 68 ; 72, 74).

7. Dispositif suivant l'une des revendications 4 à 6, **caractérisé** en ce qu'un pot (39) catalytique d'oxydation est prévu dans le conduit (34) de réaction.

8. Dispositif suivant l'une des revendications 4 à 7, **caractérisé** en ce qu'un pot (28) catalytique d'hydrolyse est prévu dans le conduit (16) de transformation et de mélange, dans la région du renvoi (30, 58), ou dans le conduit (34) de réaction avant le pot (36, 38) catalytique.

9. Dispositif suivant l'une des revendications 4 à 8, **caractérisé** en ce que le conduit (16) de transformation et de mélange est disposé centralement dans le conduit (34) de réaction.

10. Dispositif suivant l'une des revendications 4 à 9, **caractérisé** en ce que le pot (36, 38) catalytique, de préférence un pot de réduction catalytique sélective, est constitué de modules (36z ; 36r) individuels en forme de parallélépipèdes ou de segments de cercle, et en ce que le conduit (16) de transformation et de mélange possède une section rectangulaire ou circulaire, ou bien une section arrondie dans les coins.

11. Dispositif suivant l'une des revendications 4 à 10, **caractérisé** en ce que l'entrée (52) du conduit (16) de transformation et de mélange est précédée d'une préchambre (50) en forme de disque ou d'anneau.

12. Dispositif suivant l'une des revendications 4 à 10, **caractérisé** en ce qu'au moins deux ouvertures (14a, 14b) d'admission pour les gaz (a) d'échappement sont prévues comme entrée (14) du conduit (16) de transformation et de mélange.

13. Dispositif suivant l'une des revendications 4 à 12, **caractérisé** en ce que le renvoi (30, 58) comporte une surface catalytiquement active.

14. Dispositif suivant l'une des revendications 4 à 13, **caractérisé** en ce que l'autre renvoi (40, 64) comporte une surface catalytiquement active.

15. Dispositif suivant l'une des revendications 4 à 14, **caractérisé** en ce que le conduit (34) de réaction est pourvu de moyens (70) d'insonorisation.
